# EUROPÄISCHE PATENTSCHRIFT

(11) **EP 3 837 138 B1**
(45) Veröffentlichungstag und Bekanntmachung des Hinweises auf die Patenterteilung: **02.08.2023**
(21) Anmeldenummer: 19758905.4
(22) Anmeldetag: 07.08.2019
(51) Int. Cl.: B60R 1/00

(54) **RÜCKBLICKVORRICHTUNG UND KRAFTFAHRZEUG MIT RÜCKBLICKVORRICHTUNG**
REAR VIEW DEVICE AND MOTOR VEHICLE WITH REAR VIEW DEVICE
DISPOSITIF RÉTROVISEUR ET VÉHICULE AUTOMOBILE AVEC DISPOSITIF RÉTROVISEUR

(30) Priorität: 16.08.2018 DE 102018119948
(43) Veröffentlichungstag der Anmeldung: 23.06.2021
(73) Patentinhaber: Motherson Innovations Company Limited, London EC2N 2AX (GB)
(72) Erfinder: RÖTZER, Ilka, 95478 Kemnath (DE); HEIN, Peter, 70327 Stuttgart (DE)
(74) Vertreter: Weber-Bruls, Dorothée
(86) Internationale Anmeldenummer: PCT/EP2019/071247
(87) Internationale Veröffentlichungsnummer: WO 2020/035374

(56) Entgegenhaltungen:
- US-A1- 2016 250 974
- US-A1- 2017 036 599
- US-A1- 2018 079 365
- US-A1- 2018 170 264

## Beschreibung

### Gebiet der Erfindung

Die Erfindung betrifft eine Rückblickvorrichtung für ein Kraftfahrzeug umfassend eine Kameraanordnung zur Erfassung eines rückwärtigen Verkehrsgeschehens nach dem Oberbegriff von Anspruch 1 sowie ein Kraftfahrzeug mit einer solchen Rückblickvorrichtung. Ferner betrifft die Erfindung ein Verfahren zum Betreiben einer solchen Rückblickvorrichtung.

### Hintergrund der Erfindung

Rückblickvorrichtungen wie beispielsweise Rückspiegel mit einer reflektierenden Fläche in oder an Kraftfahrzeugen erleichtern dem Fahrer des Kraftfahrzeugs das Beobachten des rückwärtigen Verkehrsgeschehens und machen das Führen eines Kraftfahrzeugs sicherer. Ziel der Rückblickvorrichtungen ist es, einen möglichst großen Bereich hinter dem Fahrzeug sichtbar zu machen. In modernen Kraftfahrzeugen werden reflektierende Rückblickvorrichtungen zunehmend durch Kameraanordnungen ergänzt oder vollständig ersetzt, indem das von einer Kamera aufgenommene Bild auf einem entsprechenden Bildschirm oder Monitor für den Fahrer dargestellt wird. Die aufnehmende Kamera ist dabei meist Witterungs- und anderen verdreckenden Einflüssen ausgesetzt. Damit die Rückblickvorrichtung unter Verwendung eines Kamerabildes zuverlässig das rückwertige Verkehrsgeschehen abbilden kann, muss sichergestellt werden, dass bei den verwendeten Kameras keine etwaigen Schmutzrückstände auf der Kamera selber oder auf im Lichtweg zur Kamera angeordneten transparenten Schutzabdeckungen die Aufnahme des rückwertige Verkehrsgeschehen verhindern oder zumindest so verschlechtern, dass der Fahrer das rückwärtige Verkehrsgeschehen nicht mehr mit der gebotenen Klarheit beobachten kann.

Dazu können Kameraanordnungen mit Reinigungsvorrichtungen versehen werden, die die zuverlässige Aufnahme eines klaren Bildes vom rückwärtigen Verkehrsgeschehen während der Fahrt des Kraftfahrzeugs gewährleisten sollen. Dennoch können während einer Fahrt Verschmutzungen der Kameraanordnung plötzlich, beispielsweise durch aufspritzenden Dreck, zu einem Verlust der kompletten Ansicht des auf der Rückblickvorrichtung mittels Kamera und Monitorbild dargestellten Verkehrsgeschehen führen, was gegebenenfalls zu falschen Reaktionen des Fahrers und damit zu kritischen Verkehrssituationen führen kann. Auch andere Ursachen können alleine oder zusätzlich eine Darstellung des Verkehrsgeschehens mittels Kameraanordnung negativ beeinflussen.

US 2018/170264 A1 beschreibt eine Bildanzeigevorrichtung, umfassend eine Kamera, die an einem Fahrzeug angebracht und so konfiguriert ist, dass sie ein Bild aufnimmt, das eine Ansicht hinter dem Fahrzeug darstellt; einen Bildausschneider, der so konfiguriert ist, dass er ein zweites Bild als ein ausgeschnittenes Bild ausschneidet, das aus einem ersten Bild auf der Grundlage einer Ausschnittposition ausgeschnitten wird, die eine Position eines Teils des ersten Bildes in dem ersten Bild darstellt, wobei das erste Bild von der Kamera aufgenommen wird; und eine Anzeige, die so konfiguriert ist, dass sie das von dem Bildausschneider ausgeschnittene zweite Bild anzeigt, wobei der Bildausschneider so konfiguriert ist, dass er die Ausschnittposition für das zweite Bild in dem ersten Bild auf der Grundlage einer Änderung der Ausrichtung des Fahrzeugs ändert.

US 2018/079365 A1 lehrt einen Rückspiegel für ein Fahrzeug, umfassend ein Gehäuse, das einen inneren Hohlraum definiert; und einen Betätigungsmechanismus, der mit dem Inneren des Gehäuses gekoppelt ist und Folgendes umfasst: eine Befestigungsplatte, die drehbar in dem Hohlraum des Gehäuses an einem ersten Ende davon gekoppelt ist; eine Federplatte, die mit der Montageplatte an einer ersten Kopplung gekoppelt ist und mit der Montageplatte an einer zweiten Kopplung gleitend gekoppelt ist, wobei die Federplatte einen elastisch verformbaren Federabschnitt, der zwischen der ersten und der zweiten Kopplung angeordnet ist, und einen Armabschnitt definiert, der sich von der zweiten Kopplung gegenüber dem Federabschnitt weg erstreckt; und eine Kniehebeltrommel, die in dem inneren Hohlraum des Gehäuses angeordnet und zwischen einer ersten und einer zweiten Position drehbar ist, um den Federabschnitt der Federplatte zwischen der Kniehebeltrommel und der ersten Kupplung durch Bewegung des Armabschnitts in Richtung der zweiten Kupplung durch Gleiten eines Abschnitts der Federplatte in Bezug auf die zweite Kupplung zusammenzudrücken.

US 2016/250974 A1 beschreibt einen Rückspiegel für ein Fahrzeug, umfassend ein Gehäuse, das einen inneren Hohlraum und eine offene Seite definiert; ein Substrat, das mit der offenen Seite des Gehäuses verbunden ist und eine reflektierende Oberfläche aufweist; und einen Betätigungsmechanismus, der innerhalb des Gehäuses gekoppelt ist und Folgendes umfasst eine Montageplatte, die drehbar innerhalb des Hohlraums des Gehäuses an einem ersten Ende davon gekoppelt ist; eine Federplatte, die mit der Befestigungsplatte gekoppelt ist und einen elastisch verformbaren Federarm aufweist, der sich von der Befestigungsplatte weg erstreckt; einen Buchsenkörper, der drehbar in den inneren Hohlraum des Gehäuses gekoppelt ist, wobei der Federarm der Federplatte betriebsmäßig mit dem Buchsenkörper an einer Kopplungsachse dazwischen gekoppelt ist; und einen Motor, der in den Innenhohlraum des Gehäuses gekoppelt ist und mit dem Buchsenkörper funktionsfähig gekoppelt ist, um dessen Drehung durch einen Untersetzungsmechanismus mit einem Schneckengetriebe anzutreiben.

US 2017/036599 A1 lehrt ein Informationsanzeigesystem für ein Fahrzeug, das Folgendes umfasst: eine Schnittstelle, die an einer Seite des Fahrzeugs getragen wird und so konfiguriert ist, dass sie eine Ausgabe von einer Kamera anzeigt; und eine Steuerung, die so konfiguriert ist, dass sie als Reaktion auf eine Anzeigeanomalie die Anzeige der Ausgabe stoppt und die Schnittstelle in eine vorbestimmte Position bewegt, um ein Sichtfeld zu vergrößern, das mit der Seite des Fahrzeugs verbunden ist und von der Schnittstelle reflektiert wird.

Eine gattungsgemäße Rückblickvorrichtung für ein Kraftfahrzeug ist aus der US 2017/0036599 bekannt.

Es ist wünschenswert, eine Rückblickvorrichtung unter Verwendung einer Kameraanordnung zur Verfügung zu haben, bei der auch eine für das umfassende Beobachten des rückwärtigen Verkehrsgeschehens nicht tolerable Beeinträchtigung des Kamerabildes nicht zu einem Verlust der Beobachtungsmöglichkeit des rückwärtigen Verkehrsgeschehens führt und damit ein Vermeiden von kritischen Verkehrssituationen aufgrund eines ungenügenden Kamerabildes weiterhin ermöglicht wird.

### Zusammenfassung der Erfindung

Es ist daher eine Aufgabe der Erfindung, die gattungsgemäße Rückblickvorrichtung derart weiterzuentwickeln, dass die Nachteile des Stands der Technik überwunden werden. Dabei soll unter Verwendung einer Kameraanordnung eine für das umfassende Beobachten des rückwärtigen Verkehrsgeschehens nicht tolerable Beeinträchtigung des Kamerabildes nicht zu einem Verlust der Beobachtungsmöglichkeit des rückwärtigen Verkehrsgeschehens führen und damit ein Vermeiden dadurch bedingter kritischer Verkehrssituationen weiterhin ermöglicht werden.

Diese Aufgabe wird gelöst durch die Merkmale des Kennzeichens von Anspruch 1.

Mithin wird eine Rückblickvorrichtung für ein Kraftfahrzeug geliefert, die eine Kameraanordnung zur Erfassung eines rückwärtigen Verkehrsgeschehens und eine mit der Kameraanordnung verbundene Ausgabeeinheit, auf der das mit der Kameraanordnung erfasste rückwärtige Verkehrsgeschehen als Kamerabild zumindest für einen Fahrer des Kraftfahrzeugs dargestellt wird, umfasst, wobei die Ausgabeeinheit eine zumindest in Bereichen teilreflektierende Ausgabeeinheit ist, die ohne dargestelltes Kamerabild ein konventionelles Spiegelbild vom rückwärtigen Verkehrsgeschehen zumindest in Bereichen der Ausgabeeinheit sichtbar abbildet und im angeschalteten Zustand ein Kamerabild mit geeigneten Bildeigenschaften darstellt, die das konventionelle Spiegelbild zumindest überwiegend nicht sichtbar erscheinen lassen, und wobei die Rückblickvorrichtung zusätzlich eine Steuereinheit zur Bestimmung eines Beeinträchtigungsgrades des Kamerabildes umfasst, wobei die Steuereinheit bei Überschreiten eines vorbestimmten Beeinträchtigungsgrades des Kamerabildes die Ausgabeeinheit automatisch so ansteuert, dass das Kamerabild nicht mehr auf der Ausgabeeinheit dargestellt wird und stattdessen die Ausgabeeinheit das rückwärtige Verkehrsgeschehen mittels konventionellem Spiegelbild abbildet.

Der Zustand der Ausgabeeinheit, wo das Kamerabild nicht mehr auf der Ausgabeeinheit dargestellt wird, kann dabei beispielsweise einem Zustand entsprechen, in dem die Ausgabeeinheit ausgeschaltet ist. Allerdings braucht die Ausgabeeinheit für einen Zustand ohne dargestelltes Kamerabild nicht unbedingt ausgeschaltet sein, sondern kann auch lediglich kein Kamerabild liefern, beispielsweise in einem sogenannten Stand-by-Modus. Die Rückblickvorrichtung mit Ausgabeeinheit kann dabei beispielsweise innerhalb der Fahrgastzelle als kameraunterstützter Innenrückspiegel, außerhalb der Fahrgastzelle als kameraunterstützter Außenrückspiegel oder als anderswo angeordnete Rückblickvorrichtung angeordnet sein. Der Ausdruck "Ausgabeeinheit" bezeichnet alle zur Darstellung (Abbildung) von Kamerabildern geeigneten Vorrichtungen. Die Ausgabeeinheit kann dabei als separates Gerät ausgeführt oder eine in ein Gehäuse oder eine Komponente des Kraftfahrzeugs integrierte Einheit sein. In einer Ausführungsform ist die Ausgabeeinheit ein Bildschirm oder Monitor.

Die Steuereinheit der Rückblickvorrichtung kann dabei den Beeinträchtigungsgrad des Kamerabildes je nach Ausführungsform integral für die gesamte Bildfläche des Kamerabildes, für lokal für ausgewählte Positionen, für einzelne Pixel des Kamerabildes oder für eine Vielzahl an Sub-Flächen im Kamerabild bestimmen. Die Steuereinheit ist beispielsweise ein Computerchip mit einem entsprechenden darauf installierten und ausgeführten Auswertealgorithmus zur Bestimmung des Beeinträchtigungsgrades eines Kamerabildes. Hierzu kann eine entsprechende Bildauswertungssoftware verwendet werden. Auf der Steuereinheit sind zudem erfindungsgemäße Reaktionsabläufe installiert, sodass die Steuereinheit basierend auf den Ergebnissen des Auswertealgorithmus die Ausgabeeinheit entsprechend automatisch ansteuern kann. Der Begriff "teilreflektierend" bezeichnet hierbei ein Reflexionsvermögen der darstellenden Oberfläche der Ausgabeeinheit, das so eingestellt ist, dass die Intensität des von der darstellenden Oberfläche reflektierten Spiegelbildes geeignet geringer ist als die Intensität des mit der Ausgabeeinheit ausgestrahlten Kamerabildes, sodass der Betrachter, hier beispielsweise der Fahrer, bei der Überlagerung beider Bilder das angezeigten Kamerabild hauptsächlich oder ausschließlich anstelle des Spiegelbildes wahrnimmt. Die Ausgabeeinheit kann dabei in Bereichen (Abschnitte kleiner der Gesamtoberfläche der Ausgabeeinheit) oder ganzflächig teilreflektierend sein. Damit die Ausgabeeinheit das Kamerabild im Falle eines zu großen Beeinträchtigungsgrades des Kamerabildes nicht mehr darstellt, kann diese und/oder die Kameraanordnung abgeschaltet werden und/oder das Kamerasignal als Eingangssignal für die Ausgabeeinheit unterdrückt oder abgeschaltet werden. Beeinträchtigungen des Kamerabildes können beispielsweise durch lokale Verschmutzung auf der Kameraanordnung, durch Bildfehler aufgrund elektronischer Störungen oder durch Pixelfehler der Ausgabeeinheit oder den Ausfall von Bildzeilen in der Ausgabeeinheit hervorgerufen werden. Die Beeinträchtigung des Kamerabildes kann dabei auch durch eine Überlagerung verschiedener Ursachen hervorgerufen sein, beispielweise können Bereiche des Kamerabildes aufgrund von Verschmutzung nicht das rückwärtige Verkehrsgeschehen abbilden, während simultan dazu andere Bereiche möglicherweise andere Bildfehler aufweisen, sodass der gesamte Beeinträchtigungsgrad so hoch ist, dass die Darstellung des Kamerabildes auf der Ausgabeeinheit zugunsten der Darstellung mittels Spiegelbildes abgeschaltet wird.

Durch die Prüfung auf etwaige Beeinträchtigung des Kamerabildes wird sichergestellt, dass durch das dargestellte Kamerabild das erfasste rückwärtige Verkehrsgeschehen klar und deutlich beispielweise für den Fahrer dargestellt wird. Sollte das dargestellte Kamerabild diese Qualität nicht mehr aufweisen, stellt das Abschalten des Kamerabildes und die dann greifende Darstellung des rückwärtigen Verkehrsgeschehens mittels Reflektion des von hinten einfallenden Lichts an der Ausgabeeinheit, beispielsweise an der darstellenden Oberfläche der Ausgabeeinheit, eine zuverlässige und ausreichende Möglichkeit für beispielsweise den Fahrer des Kraftfahrzeugs zur Verfügung, weiterhin das rückwärtigen Verkehrsgeschehen ohne Informationsverlust zu beobachten.

Somit ermöglicht die erfindungsgemäße Rückblickvorrichtung mit Kameraanordnung, dass bei einer für das umfassende Beobachten des rückwärtigen Verkehrsgeschehens nicht tolerable Beeinträchtigung des Kamerabildes nicht ein Verlust der Beobachtungsmöglichkeit des rückwärtigen Verkehrsgeschehens auftritt und vermeidet damit das Auftreten dadurch bedingter kritischer Verkehrssituationen.

Der Beeinträchtigungsgrad des Kamerabildes wird aufgrund von einer Verschmutzung der Kameraanordnung hervorgerufen. In einer Ausführungsform wird der Beeinträchtigungsgrad des Kamerabildes aufgrund einer oder mehrerer nicht verschmutzungsbedingter Störungen aus der Gruppe eines geringen Ladestatus einer Elektrobatterie in einem Elektrofahrzeug, eines ruckelnden Kamerabildes, eines flimmernden Kamerabildes, eines flackernden Kamerabildes, eines Standbildes oder einer EMV-Einwirkung hervorgerufen. Eine Verschmutzung der Kameraanordnung kann jederzeit während einer Fahrt des Kraftfahrzeugs gegebenenfalls auch plötzlich auftreten (Durchfahren einer Pfütze etc.) und stellt eine große Fehlerquelle zur Beeinträchtigung von Kamerabilder in einer Rückblickvorrichtung dar. Die Steuereinheit wertet hierbei sowohl den Verschmutzungsgrad im Kamerabild der Kameraanordnung aus als auch steuert sie die Ausgabeeinheit entsprechend des bestimmten Verschmutzungsgrad wie spezifiziert an. Der vorbestimmte Beeinträchtigungsgrad kann beispielsweise überschritten sein, wenn 20% oder mehr des gesamten Kamerabildes durch Verschmutzungen verdeckt ist. Der vorbestimmte Beeinträchtigungsgrad kann beispielsweise auch überschritten sein, wenn 10% oder mehr des Kamerabildes in bestimmten Bereichen, beispielsweise im Bereich um die Bildmitte, verdeckt ist. Die Prozentangaben bezieht sich hier auf den Anteil der beeinträchtigten Fläche des Kamerabildes zu dessen Gesamtfläche auf der Ausgabeeinheit. Als "verdeckt" kann angesehen werden, wenn die Transmission des eigentlichen Kamerabildes durch die Verschmutzung hindurch in diesem Bereich um mehr als 50% geringer ist als in nicht verschmutzten Bereichen. Insbesondere ist ein Bereich verdeckt, wenn die Transmission geringer 10% von der Transmission in nicht verdeckten Bereichen beträgt, beispielsweise bei 0% Transmission. Bei anderen nicht verschmutzungsbedingten Störungen, die die Beobachtung der rückwärtigen Verkehrsgeschehens beeinträchtigen können, wird ebenfalls das Kamerabild nicht mehr auf der Ausgabeeinheit dargestellt. Eine EMV-Einwirkung bezeichnet dabei elektromagnetische Störsignale, die von außen in das System dringen und Probleme generieren können, sei es über ein Mobiltelefon, einen Funkmast, oder dergleichen. Auch hier kann der vorbestimmte Beeinträchtigungsgrad beispielsweise überschritten sein, wenn 20% oder mehr des gesamten Kamerabildes durch diese Störungen nicht mehr dargestellt werden kann. Der vorbestimmte Beeinträchtigungsgrad kann beispielsweise auch überschritten sein, wenn 10% oder mehr des Kamerabildes in bestimmten Bereichen, beispielsweise im Bereich um die Bildmitte, gestört sind. Dies erhöht die Sicherheit im Straßenverkehr weiterhin, indem der Fahrer beispielsweise nicht fälschlicherweise ein nicht korrektes oder nicht aktuelles Bild des rückwärtigen Verkehrsgeschehens angeboten bekommt. Hier gibt die Steuereinheit bei Fehlererkennung sofort ein Signal an die Ausgabeeinheit aus und schaltet diese aus.

In einer weiteren Ausführungsform ist die Steuereinheit dazu ausgestaltet, den Beeinträchtigungsgrad des Kamerabildes in einer zweidimensionalen Anordnung an Messbereichen im Kamerabild für jeden Messbereich separat zu bestimmen. Der Begriff "Messbereich" bezeichnet hierbei einen Bereich des Kamerabildes, der ein Ausschnitt oder Sub-Bild des gesamten Kamerabildes darstellt. Aneinandergrenzende Messbereiche können den gleichen Beeinträchtigungsgrad aufweisen, können aber auch deutlich unterschiedliche Beeinträchtigungsgrade besitzen. Durch die für die einzelnen Messbereiche separat bestimmten Beeinträchtigungsgrade lässt sich zusätzlich zu einem integralen Beeinträchtigungsgrad eine positionsabhängige Relevanz der Beeinträchtigung der Beobachtbarkeit des rückwärtigen Verkehrsgeschehens bestimmen.

In einer weiteren Ausführungsform überdeckt die zweidimensionalen Anordnung an Messbereichen das gesamte Kamerabild. Damit kann jede Form von Beeinträchtigungen unabhängig von ihrer Position erfasst und bewertet werden.

In einer weiteren Ausführungsform sind die Messbereiche quadratisch oder rechteckig mit einem Kantenverhältnis von kleiner zu großer Kante von mehr als 50% über das Kamerabild angeordnet. Damit weisen die Messbereiche eine regelmäßige Form auf, sodass eine Matrix an Messbereichen gebildet werden kann, die gleichmäßig beispielsweise das gesamte Kamerabild abdecken kann, sodass alle Bereiche des Kamerabildes anhand der Messbereiche ausgewertet werden.

In einer weiteren Ausführungsform umfasst die zweidimensionale Anordnung ein zentrales Hauptfeld aus mehreren Messbereichen, das einen zentralen Bereich des Kamerabildes überdeckt. Der Begriff "zentraler Bereich" bezeichnet dabei einen Bereich um die Mitte des Kamerabilds herum. Damit können die Messbereiche in der Mitte des Kamerabildes für die Bestimmung eines Beeinträchtigungsgrades besonders gewichtet werden, da die Bildmitte der größten Informationsgehalt für die Beobachtung des Verkehrsgeschehens liefert.

In einer weiteren Ausführungsform ist die Steuereinheit dazu ausgestaltet, einen der Messbereiche als unzulässig beeinträchtigt anzusehen, wenn der vorbestimmte Beeinträchtigungsgrad für diesen Messbereich überschritten ist. In unzulässig beeinträchtigten Messbereichen ist das rückwärtige Verkehrsgeschehen nicht mehr mit dem für die Sicherheit beim Fahren notwendigen Maße beobachtbar. Hierbei kann der Grund der Beeinträchtigung gegebenenfalls von Messbereich zu Messbereich variieren. Beispielsweise können manche Messbereiche aufgrund von Verdreckung der Kameraanordnung das rückwärtige Verkehrsgeschehen nicht mehr korrekt dargestellt werden, während andere Messbereiche eventuell aufgrund von Bildfehlern, Pixelfehlern etc. das rückwärtige Verkehrsgeschehen ebenfalls nicht mehr korrekt darstellen können.

In einer weiteren Ausführungsform ist die Steuereinheit dazu ausgestaltet, das Kamerabild nicht mehr auf der Ausgabeeinheit darzustellen, wenn 20% oder mehr der Messbereiche als unzulässig beeinträchtigt angesehen werden oder wenn 10% oder mehr der Messbereiche im zentralen Hauptfeld als unzulässig beeinträchtigt angesehen werden. Die Prozentangaben beziehen sich hier auf den Anteil der beeinträchtigten Fläche des Kamerabildes zu dessen Gesamtfläche auf der Ausgabeeinheit. Für Kamerabilder mit einem höheren Beeinträchtigungsgrad würde das Sicherheitsrisiko durch unklare und/oder unvollständige Abbildungen des rückwärtigen Verkehrsgeschehens bei weiter verwendetem Kamerabild in der Rückblickvorrichtung deutlich steigen. Die Gewichtung beeinträchtigter zu nicht beeinträchtigter Bereiche im Hinblick auf die Auswirkung auf das dargestellte Gesamt-Kamerabild ist gerade bei voranstehend spezifizierter Gewichtungsmethode einfach und zuverlässig. Die Auswertung der Anzahl der beeinträchtigten Messbereiche kann aufgrund einer bestimmten Beeinträchtigungsursache oder für alle unterschiedlichen Beeinträchtigungsursachen vorgenommen werden. Beispielweise kann eine nur gering verschmutzte Kameraanordnung eine nicht kritische Anzahl an verdreckten Messbereichen verursachen, sodass das Kamerabild weiterhin das rückwärtige Verkehrsgeschehen ausreichend genau und zuverlässig darstellt, sodass kein erhöhtes Sicherheitsrisiko beim Fahrern des Kraftfahrzeugs vorliegt. Gleiches könnte beispielsweise bei einer geringen Anzahl an Bildfehlern im Kamerabild vorliegen. Treten nun zusätzliche Bildfehler bei leicht verdreckter Kameraanordnung oder eine zusätzliche Verdreckung der Kameraanordnung bei bereits vorhandenen Bildfehlern auf, so könnte der gesamte Beeinträchtigungsgrad zu hoch sein, sodass das Kamerabild nicht mehr auf der Ausgabeeinheit dargestellt wird und stattdessen das Spiegelbild die darstellende Aufgabe übernimmt.

In einer weiteren Ausführungsform ist die Steuereinheit dazu ausgestaltet, den Beeinträchtigungsgrad des Kamerabildes fortlaufend zu bestimmen. Damit kann während der Betriebszeit des Kraftfahrzeugs jederzeit verhindert werden, dass der Fahrer aufgrund von plötzlich auftretenden Beeinträchtigungen (bespielweise Verschmutzungen oder plötzlicher Bildfehler) keine Darstellung des rückwärtigen Verkehrsgeschehens erhält. Somit wird die Fahrsicherheit während der gesamten Betriebszeit gewährleistet und ein Abstellen des Fahrzeugs verhindert. Laut einer Norm müssen immer zwei Spiegel betriebsbereit sein, beispielweise einer der beiden Außenspiegel und der Innenspiegel.

In einer Ausführungsform ist die Ausgabeeinheit eine vollflächig teilreflektierende Ausgabeeinheit, die ohne dargestelltes Kamerabild ein konventionelles Spiegelbild sichtbar über die gesamte Ausgabeeinheit abbildet. Bei dieser vollflächigen Darstellung des rückwertigen Verkehrsgeschehens behält der Fahrer selbst bei reflektierender Anzeige ohne Kamerabild weiterhin einen guten Überblick über das Verkehrsgeschehen. Die sichtbare Darstellung bedeutet hier, dass das Spiegelbild nun bei abwesenden Kamerabild für den Betrachter sichtbar ist und das Reflexionsvermögen der Ausgabeeinheit dafür entsprechend angepasst ist. Allerdings darf das Reflexionsvermögen nicht so hoch sein, dass sich das Speiegelbild bei dargestelltem Kamerabild störend mit dem Kamerabild überlagert.

Damit die Ausgabeeinheit ihre teilreflektierende Eigenschaft erhält, kann direkt auf der Ausgabeeinheit beispielsweise eine teiltransparente Folie oder Schicht mit reflektierenden Eigenschaften auf der dem Betrachter zugewandten Seite angebracht sein. Damit diese teiltransparente Schicht oder Folie auf der Ausgabeeinheit aufgebracht werden kann, wird die Ausgabeeinheit zumindest auf der dem späteren Betrachter zugewandten Seite von Schmutz, Staub, Fett, Fingerabdrücken und/oder anderen Verschmutzungen auf geeignete Weise befreit, in eine Bestückungsmaschine eingelegt und seine Dimensionen zumindest bezüglich der mit der Folie oder Schicht zu beschichtenden Seite über eine Messvorrichtung ausgemessen. Im Falle einer aufzubringenden Folie wird die Folie zugeschnitten, beispielsweise aus einer teiltransparenten Folie ausgestanzt, lagegerecht angesetzt und für den Aufbringungsschritt positioniert. Folie und darstellenden Oberfläche der Ausgabeeinheit werden dann mit einer Flüssigkeit benetzt und die feuchte Folie mit der feuchten darstellenden Oberfläche in Kontakt gebracht und aufeinander laminiert. Durch seitliches Abrolle und unter Verwendung einer elastischen Rolle wird die Folie auf die Ausgabeeinheit gedrückt und damit die Folie blasenfrei auf die Ausgabeeinheit aufgebracht. Überstehende Flüssigkeiten können nun entfernt werden. Die so aufgebrachte Reflexionsschicht liegt nun auf der darstellenden Oberfläche auf und ist durch das Ausmessen passgenau auf die Größe der Ausgabeeinheit und deren Schirmfläche angepasst. Die Ränder der Folie beziehungsweise der Ausgabeeinheit können durch einen Rahmen anschließend kaschiert und fixiert werden. Die teilreflektierende Folie kann dabei eine reflektierende Schicht aus Titanoxid, Nickel-Chrom oder anderen das sichtbare Licht reflektierende Materialien sein. Das Reflexionsvermögen der Folie kann dabei beispielsweise über die Schichtdicke der reflektierenden Schicht eingestellt werden.

Die Ausgabeeinheit kann zusätzlich noch weitere Merkmale umfassen wie beispielsweise eine Schutzschicht (beispielsweise gegen mechanische Belastungen), eine beheizbare Schicht (beispielsweise für Rückblickvorrichtungen, die außerhalb der Fahrgastzelle angeordnet sind), oder eine integrierte Antenne, beispielsweise in der Schutzschicht oder der teilreflektierenden Folie. Außerdem können die Schutzschicht und/oder die teilreflektierende Folie ausgefräste und/oder ausgeätzte sogenannte Icons, Bilder und/oder Warnungen und/oder Symbole, beispielsweise Kompass, Uhrzeit etc., umfassen.

Die Erfindung betrifft des Weiteren ein Kraftfahrzeug mit mindestens einer erfindungsgemäßen Rückblickeinrichtung. Der Begriff Kraftfahrzeuge bezieht sich auf alle motorisierten Fahrzeuge mit Rückblickvorrichtungen.

Die Erfindung betrifft des Weiteren ein Verfahren zum Betreiben einer erfindungsgemäßen Rückblickeinrichtung für ein Kraftfahrzeug nach Anspruch 12.

Mithin umfasst das Verfahren nach der Erfindung nachfolgende Schritte:
- Erfassen eines rückwärtigen Verkehrsgeschehens mit der Kameraanordnung;
- Darstellen des mit der Kameraanordnung erfassten rückwärtigen Verkehrsgeschehens als Kamerabild für einen Fahrer des Kraftfahrzeugs auf der Ausgabeeinheit mit geeigneten Bildeigenschaften, die ein konventionelles Spiegelbild der teilreflektierenden Ausgabeeinheit zumindest überwiegend nicht sichtbar erscheinen lassen;
- Bestimmen eines Beeinträchtigungsgrades des Kamerabildes durch die Steuereinheit;
- automatisches Ansteuern der Ausgabeeinheit durch die Steuereinheit in einer Weise, dass bei Überschreiten eines vorbestimmten Beeinträchtigungsgrades das Kamerabild nicht mehr auf der Ausgabeeinheit dargestellt wird; und
- sichtbares Abbilden des rückwärtigen Verkehrsgeschehens zumindest in Bereichen auf der Ausgabeeinheit mittels des konventionellen Spiegelbildes vom rückwärtigen Verkehrsgeschehen.

Die Ausgabeeinheit kann dabei beispielsweise ein Bildschirm oder Monitor sein.

Somit ermöglicht das erfindungsgemäße Verfahren zum Betreiben einer erfindungsgemäßen Rückblickeinrichtung für ein Kraftfahrzeug, dass bei einer für das umfassende Beobachten des rückwärtigen Verkehrsgeschehens nicht tolerable Beeinträchtigung des Kamerabildes nicht ein Verlust der Beobachtungsmöglichkeit des rückwärtigen Verkehrsgeschehens auftritt und vermeidet damit das Auftreten dadurch bedingter kritischer Verkehrssituationen.

Erfindungsgemäß wird der Beeinträchtigungsgrad des Kamerabildes aufgrund vom Verschmutzung der Kameraanordnung hervorgerufen.

In einer Ausführungsform des Verfahrens wird der Beeinträchtigungsgrad des Kamerabildes in einer zweidimensionalen Anordnung an Messbereichen im Kamerabild für jeden Messbereich durch die Steuereinheit separat bestimmt.

In einer Ausführungsform des Verfahrens sieht die Steuereinheit einen der Messbereiche als unzulässig beeinträchtigt an, wenn der vorbestimmte Beeinträchtigungsgrad für diesen Messbereich überschritten ist. Die unzulässige Beeinträchtigung kann beispielsweise durch lokale Verschmutzung auf der Kameraanordnung betreffend den entsprechenden Messbereich im Kamerabild, durch Bildfehler aufgrund elektronischer Störungen oder Pixelfehlen der Ausgabeeinheit hervorgerufen werden.

In einer Ausführungsform des Verfahrens stellt die Steuereinheit das Kamerabild nicht mehr auf der Ausgabeeinheit dar, wenn 20% oder mehr der Messbereiche als unzulässig beeinträchtigt angesehen werden oder wenn 10% oder mehr der Messbereiche im zentralen Hauptfeld als unzulässig beeinträchtigt angesehen werden.

In einer Ausführungsform des Verfahrens umfasst dieses den weiteren Schritt, dass das Kamerabild nicht mehr auf der Ausgabeeinheit dargestellt wird, falls eine nicht verschmutzungsbedingte Störung, die die Beobachtung der rückwärtigen Verkehrsgeschehens beeinträchtigen können, vorliegt.

Erfindungsgemäß erkennt die Steuereinheit eine Beseitigung der Verschmutzung und schaltet als Reaktion darauf die Ausgabeeinheit wieder ein. In einer Ausführungsform des Verfahrens erkennt die Steuereinheit eine Beseitigung der nicht verschmutzungsbedingten Störung und schaltet als Reaktion darauf die Ausgabeeinheit wieder ein. Damit kann die Darstellung des rückwärtigen Verkehrsgeschehens ohne Zeitverlust wieder auf die elektronische Darstellung umgeschaltet werden.

In einer Ausführungsform des Verfahrens überprüft die Steuereinheit bei ausgeschalteter oder sich in einem Stand-by-Modus befindlichen Ausgabeeinheit die Kamerabilder Frame-by-Frame weiter, um eine Beseitigung der Verschmutzung oder der nicht verschmutzungsbedingten Störung festzustellen. Damit kann ohne Zeitverzug festgestellt werden, ob die Beeinträchtigung des Kamerabildes weiter vorliegt oder beseitigt wurde.

In einer Ausführungsform des Verfahrens gibt der Fahrer des Kraftfahrzeugs manuell ein, ob die Rückblickeinrichtung in einem elektronischen Modus mittels Darstellen des mit der Kameraanordnung erfassten rückwärtigen Verkehrsgeschehens als Kamerabild oder in einem reflektierenden Modus mittels sichtbaren Abbildens des rückwärtigen Verkehrsgeschehens zumindest in Bereichen auf der Ausgabeeinheit mittels des konventionellen Spiegelbildes betrieben werden soll, wobei beim Inbetriebnehmen des Kraftfahrzeugs standardmäßig immer der elektronische Modus eingestellt wird. Damit behält der Fahrer die Kontrolle über den Anzeigemodus für das rückwärtige Verkehrsgeschehen.

Die voranstehend aufgelisteten Ausführungsformen können einzeln oder in beliebiger Kombination zueinander zur Ausgestaltung der erfindungsgemäßen Vorrichtung und des erfindungsgemäßen Verfahrens verwendet werden.

### Kurze Beschreibung der Abbildungen

Diese und andere Aspekte der Erfindung werden im Detail in den Abbildungen wie folgt gezeigt.
- Fig. 1:: schematische Darstellung einer Ausführungsform der erfindungsgemäßen Rückblickvorrichtung bzw. des erfindungsgemäßen Kraftfahrzeugs mit einer solchen Rückblickvorrichtung;
- Fig.2:: schematische Darstellung einer Ausführungsform einer zweidimensionalen Anordnung von Messbereichen über das gesamte Kamerabild;
- Fig.3:: schematische Darstellung gemäß Figur 2 mit zentralem Hauptfeld aus mehreren Messbereichen;
- Fig.4:: eine Ausführungsform des erfindungsgemäßen Verfahrens zum Betrieben einer Rückblickeinrichtung für ein Kraftfahrzeug.

### Detaillierte Beschreibung der Ausführungsbeispiele

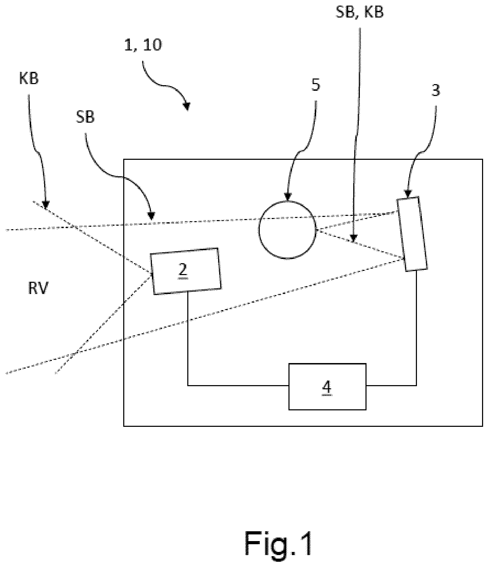

Fig. 1 zeigt eine schematische Darstellung einer Ausführungsform der erfindungsgemäßen Rückblickvorrichtung 1 bzw. des erfindungsgemäßen Kraftfahrzeugs 10 mit einer solchen Rückblickvorrichtung 1 umfassend eine Kameraanordnung 2 zur Erfassung eines rückwärtigen Verkehrsgeschehens RV und einen mit der Kameraanordnung 2 über eine oder mehrere geeignete Datenverbindungen (drahtlos oder kabelgestützt) verbundene Ausgabeeinheit 3, die hier als Bildschirm 3 ausgeführt ist, auf dem das mit der Kameraanordnung 2 erfasste rückwärtige Verkehrsgeschehen als Kamerabild KB zumindest für einen Fahrer 5 (hier symbolisch mit einem Kreis als Kopf dargestellt) des Kraftfahrzeugs 10 dargestellt wird, wobei der Bildschirm 3 ein zumindest in Bereichen (hier über seine gesamte dem Fahrer zugewandten Oberfläche) teilreflektierender Bildschirm 3 ist, der ohne dargestelltes Kamerabild KB mittels seiner teilreflektierenden Oberfläche ein konventionelles Spiegelbild SB des rückwärtigen Verkehrsgeschehens RV sichtbar abbildet und im angeschalteten Zustand ein Kamerabild KB mit geeigneten Bildeigenschaften darstellt, die das konventionelle Spiegelbild SB zumindest überwiegend nicht sichtbar erscheinen lassen. Zusätzlich umfasst die Rückblickvorrichtung 1 eine Steuereinheit 4, beispielsweise umfassend einen entsprechend gestalteten Prozessor mit einem darauf installierten und ausgeführten Auswertealgorithmus, zur Bestimmung eines Beeinträchtigungsgrades BG des Kamerabildes KB. Die Steuereinheit steuert dabei bei Überschreiten eines vorbestimmten Beeinträchtigungsgrades VBG des Kamerabildes KB den Bildschirm 2 automatisch über eine geeignete Datenverbindung so an, dass das Kamerabild KB nicht mehr auf dem Bildschirm 3 dargestellt wird. Hierzu kann beispielsweise der Bildschirm 3 oder die Kameraanordnung 2 von der Steuereinheit 4 ausgeschaltet werden, sodass kein Kamerasignal mehr vorliegt oder die Übertragung des Kamerasignals zur Darstellung des Kamerabildes KB auf dem Bildschirm 3 kann von der Steuereinheit 4 unterbrochen werden. Stattdessen bildet dann der Bildschirm 3 das rückwärtige Verkehrsgeschehen RV mittels konventionellem Spiegelbild SB für den Fahrer sichtbar ab. Der Beeinträchtigungsgrad BG des Kamerabildes KB kann beispielsweise aufgrund vom Verschmutzung der Kameraanordnung 2 hervorgerufen werden, wobei der Grad der Verschmutzung den Beeinträchtigungsgrad bestimmt. Neben einer Verschmutzung können auch andere Ursachen zu einer Beeinträchtigung des Kamerabildes führen, wie beispielweise elektronische Bildfehler. Die Steuereinheit 4 ist dabei dazu ausgestaltet, den Beeinträchtigungsgrades BG des Kamerabildes KB fortlaufend zu bestimmen. Der hier gezeigte Bildschirm 3 ist ein vollflächig teilreflektierender Bildschirm 3, der ohne dargestelltes Kamerabild KB ein konventionelles Spiegelbild SB sichtbar über den gesamten Bildschirm 3 abbildet. Die Steuereinheit 4 ist hier auch dazu vorgesehen, zusätzlich auch bei anderen nicht verschmutzungsbedingten Störungen, die die Beobachtung des rückwärtigen Verkehrsgeschehens RV beeinträchtigen können, das Kamerabild KB nicht mehr auf dem Bildschirm 3 darzustellen, wobei die nicht verschmutzungsbedingte Störung eine Störung aus der Gruppe eines geringen Ladestatus einer Elektrobatterie in einem Elektrofahrzeug, eines ruckelnden Kamerabild, eines flimmernden Kamerabildes, eines flackernden Kamerabildes, eines Standbildes oder einer EMV-Einwirkung sein kann.

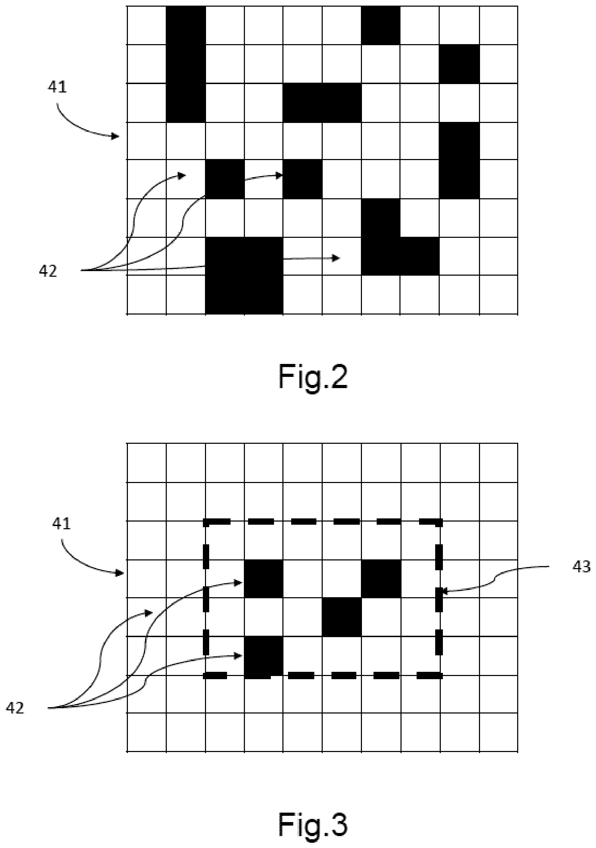

Fig.2 zeigt eine schematische Darstellung einer Ausführungsform einer zweidimensionalen Anordnung 41 von Messbereichen 42 über das gesamte Kamerabild KB, die zur Bestimmung des Beeinträchtigungsgrades im Kamerabild KB verwendet werden. Hierbei ist die Steuereinheit 4 dazu ausgestaltet, den Beeinträchtigungsgrad BG des Kamerabildes KB in einer zweidimensionalen Anordnung 41 an Messbereichen 42 im Kamerabild KB für jeden Messbereich 42 separat zu bestimmen. Hierbei überdeckt die zweidimensionale Anordnung 41 an Messbereichen 42 das gesamte Kamerabild KB. Die Messbereiche 42 sind dabei quadratisch oder rechteckig mit einem Kantenverhältnis von kleiner zu großer Kante von mehr als 50% über das Kamerabild KB gewählt. Die Steuereinheit 4 ist dabei dazu ausgestaltet, einen der Messbereiche 42 als unzulässig beeinträchtigt anzusehen (hier beispielhaft dunkel dargestellt), wenn der vorbestimmte Beeinträchtigungsgrad VBG für diesen Messbereich 42 überschritten ist. Die übrigen Messbereiche 42, die nach der Bildanalyse durch die Steuereinheit 4 als nicht beeinträchtigt und damit zur Darstellung des rückwärtigen Verkehrsgeschehen RV als geeignet von der Steuereinheit 4 angesehen werden, sind hier beispielhaft weiß dargestellt. Die Steuereinheit 4 kann dabei dazu ausgestaltet sein, das Kamerabild KB dann nicht mehr auf der Ausgabeeinheit 3 darzustellen, wenn 20% oder mehr der Messbereiche 42 über die gesamte Fläche des analysierten Kamerabildes KB als unzulässig beeinträchtigt angesehen werden.

Fig.3 zeigt eine schematische Darstellung gemäß Figur 2 mit zentralem Hauptfeld 43 aus mehreren Messbereichen 42. Die zweidimensionalen Anordnung 41 umfasst hier ein zentrales Hauptfeld 43 (dick schwarz gestrichelt dargestellt) mit mehreren Messbereichen 42, das einen zentralen Bereich des Kamerabildes KB überdeckt. Die Steuereinheit 4 ist dabei dazu ausgestaltet, einen der Messbereiche 42 als unzulässig beeinträchtigt anzusehen (hier beispielhaft dunkel dargestellt), wenn der vorbestimmte Beeinträchtigungsgrad VBG für diesen Messbereich 42 überschritten ist. Die übrigen Messbereiche 42, die nach der Bildanalyse durch die Steuereinheit 4 als nicht beeinträchtigt und damit zur Darstellung des rückwärtigen Verkehrsgeschehen RV von der Steuereinheit 4 als geeignet angesehen werden, sind hier beispielhaft weiß dargestellt. Die Steuereinheit 4 kann dabei dazu ausgestaltet sein, das Kamerabild KB dann nicht mehr auf der Ausgabeeinheit 3 darzustellen, wenn 10% oder mehr der Messbereich 42 im zentralen Hauptfeld 43 als unzulässig beeinträchtigt angesehen werden.

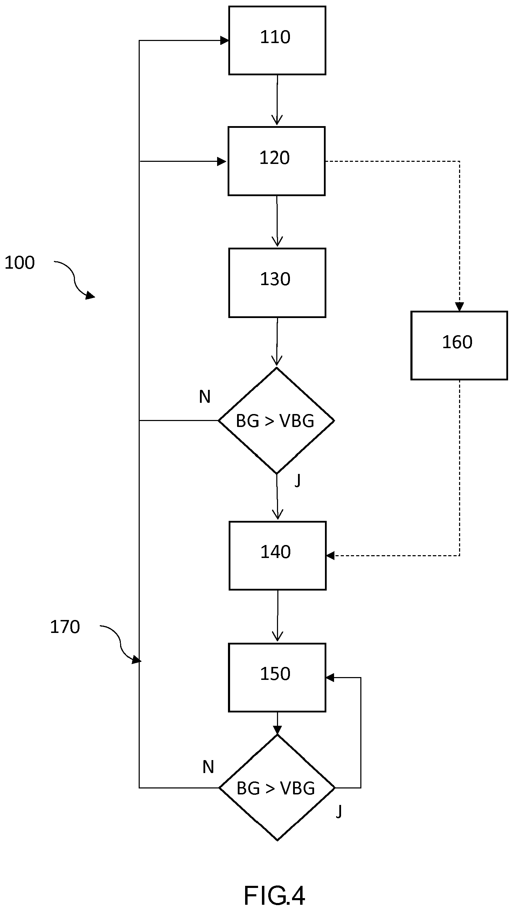

Fig.4 zeigt eine Ausführungsform des erfindungsgemäßen Verfahrens 100 zum Betreiben einer Rückblickeinrichtung 1 für ein Kraftfahrzeug 10 umfassend eine Kameraanordnung 2, eine mit der Kameraanordnung 2 verbundene zumindest in Bereichen teilreflektierende Ausgabeeinheit 3, beispielsweise ein Bildschirm 3, und eine Steuereinheit 4, umfassend die Schritte des Erfassens 110 eines rückwärtigen Verkehrsgeschehens RV mit der Kameraanordnung 2; des Darstellens 120 des mit der Kameraanordnung 2 erfassten rückwärtigen Verkehrsgeschehen RV als Kamerabild KB für einen Fahrer 5 des Kraftfahrzeugs 10 auf der Ausgabeeinheit 3 mit geeigneten Bildeigenschaften, die ein konventionelles Spiegelbild SB der teilreflektierenden Ausgabeeinheit zumindest überwiegend nicht sichtbar erscheinen lassen; des Bestimmens 130 eines Beeinträchtigungsgrades BG des Kamerabildes KB durch die Steuereinheit 4; des automatischen Ansteuerns 140 der Ausgabeeinheit 3 durch die Steuereinheit 4 in einer Weise, dass bei Überschreiten eines vorbestimmten Beeinträchtigungsgrades VBG (Beeinträchtigung BG größer ist als der vorbestimmte Beeinträchtigungsgrad VGB = J) das Kamerabild KB nicht mehr auf der Ausgabeeinheit 3 dargestellt wird, wobei bei einer Beeinträchtigung BG kleiner oder gleich dem vorbestimmten Beeinträchtigungsgrad VGB (= N) sowohl das Erfassen 110 des rückwärtigen Verkehrsgeschehens als auch dessen Darstellung 120 auf der Ausgabeeinheit 3 fortgeführt wird; und des sichtbaren Abbildens 150 des rückwärtigen Verkehrsgeschehens RV zumindest in Bereichen auf der Ausgabeeinheit 3 mittels des konventionellen Spiegelbildes SB vom rückwärtigen Verkehrsgeschehen RV im Fall "J". Hierbei kann der Beeinträchtigungsgrad BG des Kamerabildes KB aufgrund von einer Verschmutzung der Kameraanordnung 2 hervorgerufen werden. Hierbei kann der Beeinträchtigungsgrad BG des Kamerabildes KB in einer zweidimensionalen Anordnung 41 an Messbereichen 42 im Kamerabild KB für jeden Messbereich 42 durch die Steuereinheit 4 separat bestimmt werden. Das Verfahren kann außerdem den weiteren Schritt umfassen, dass das Kamerabild KB nicht mehr auf der Ausgabeeinheit 3 dargestellt wird 160, falls eine nicht verschmutzungsbedingte Störung, die die Beobachtung der rückwärtigen Verkehrsgeschehens RV beeinträchtigen können, vorliegt. In dieser Ausführungsform überprüft die Steuereinheit 4 ferner bei ausgeschalteter oder sind in einem Stand-by-Modus befindlichen Aufgabeeinheit 3 die Kamerabilder KB Frame-by-Frame weiter, um eine Beseitigung der Verschmutzung oder der nicht verschmutzungsbedingten Störung festzustellen. Die Steuereinheit 4 kann einen der Messbereiche 42 dann als unzulässig beeinträchtigt ansehen, wenn der vorbestimmte Beeinträchtigungsgrad VBG für diesen Messbereich 42 überschritten ist. Hierbei kann die Steuereinheit 4 das Kamerabild KB nicht mehr auf der Ausgabeeinheit 3 darstellen, wenn 20% oder mehr der Messbereiche 42 als unzulässig beeinträchtigt angesehen werden oder wenn 10% oder mehr der Messbereiche 42 im zentralen Hauptfeld 43 als unzulässig beeinträchtigt angesehen werden. Ist der Beeinträchtigungsgrad BG wieder kleiner als der vorbestimmten Beeinträchtigungsgrades VBG, so erkennt die Steuereinheit 4 dieses und schaltet als Reaktion darauf die Ausgabeeinheit 3 wieder ein 170. In einer weiteren Ausführungsform (hier nicht im Detail gezeigt), kann der Fahrer 5 des Kraftfahrzeugs 10 des Weiteren manuell eingeben, ob die Rückblickeinrichtung 1 in einem elektronischen Modus (Darstellen 120 des mit der Kameraanordnung 2 erfassten rückwärtigen Verkehrsgeschehens RV als Kamerabild KB) oder in einem reflektierenden Modus (sichtbaren Abbildens 150 des rückwärtigen Verkehrsgeschehens RV zumindest in Bereichen auf der Ausgabeeinheit 3 mittels des konventionellen Spiegelbildes SB) betrieben werden soll, wobei beim Inbetriebnehmen des Kraftfahrzeugs standardmäßig immer der elektronische Modus eingestellt wird.

Die hier gezeigten Ausführungsformen stellen nur Beispiele für die vorliegende Erfindung dar und dürfen daher nicht einschränkend verstanden werden. Der Schutzbereich der Erfindung wird durch die Patentansprüche bestimmt.

### Bezugszeichenliste

- 1: erfindungsgemäße Rückblickvorrichtung
- 2: Kameraanordnung
- 3: Ausgabeeinheit (beispielsweise ein Bildschirm oder Monitor)
- 4: Steuereinheit zur Bestimmung eines Beeinträchtigungsgrades des Kamerabildes und darauf basierende Ansteuerung der Ausgabeeinheit
- 41: zweidimensional Anordnung an Messbereichen
- 42: Messereiche im Kamerabild zur Bestimmung des lokalen Beeinträchtigungsgrades
- 43: zentrales Hauptfeld mit mehreren Messfeldern im zentralen Bereich des Kamerabildes
- 5: Fahrer des Kraftfahrzeugs
- 10: Kraftfahrzeug

- 100: erfindungsgemäßes Verfahren zum Betrieben einer Rückblickeinrichtung für ein Kraftfahrzeug
- 110: Erfassen eines rückwärtigen Verkehrsgeschehens mit der Kameraanordnung
- 120: Darstellen des mit der Kameraanordnung (2) erfassten rückwärtigen Verkehrsgeschehen als Kamerabild auf der Ausgabeeinheit
- 130: Bestimmen eines Beeinträchtigungsgrades des Kamerabildes aufgrund vom Verschmutzung
- 140: Ansteuern der Ausgabeeinheit, sodass das Kamerabild nicht mehr auf der Ausgabeeinheit dargestellt wird
- 150: Abbilden des rückwärtigen Verkehrsgeschehens auf der Ausgabeeinheit mittels des konventionellen Spiegelbildes
- 160: Kamerabild wird nicht mehr auf der Ausgabeeinheit dargestellt, falls eine nicht verschmutzungsbedingte Störung vorliegt
- 170: Einschalten der Ausgabeeinheit nach Erkennen einer Beseitigung der Verschmutzung oder der nicht verschmutzungsbedingten Störung

- BG: Beeinträchtigungsgrad des Kamerabildes (z.B. aufgrund vom Verschmutzung der Kameraanordnung)
- KB: Kamerabild
- RV: rückwärtiges Verkehrsgeschehen
- SB: Spiegelbild
- VBG: vorbestimmten Beeinträchtigungsgrades

## Patentansprüche

1. Eine Rückblickvorrichtung (1) für ein Kraftfahrzeug (10) umfassend eine Kameraanordnung (2) zur Erfassung eines rückwärtigen Verkehrsgeschehens (RV) und eine mit der Kameraanordnung (2) verbundene Ausgabeeinheit (3), insbesondere ein Bildschirm, auf der das mit der Kameraanordnung (2) erfasste rückwärtige Verkehrsgeschehen als Kamerabild (KB) zumindest für einen Fahrer (5) des Kraftfahrzeugs (10) dargestellt wird,
wobei die Ausgabeeinheit (3) eine zumindest in Bereichen teilreflektierende Ausgabeeinheit (3) ist, die ohne dargestelltes Kamerabild (KB) ein konventionelles Spiegelbild (SB) vom rückwärtigen Verkehrsgeschehen zumindest in Bereichen der Ausgabeeinheit (3) sichtbar abbildet und im angeschalteten Zustand ein Kamerabild (KB) mit geeigneten Bildeigenschaften darstellt, die das konventionelle Spiegelbild (SB) zumindest überwiegend nicht sichtbar erscheinen lassen, und
die Rückblickvorrichtung (1) zusätzlich eine Steuereinheit (4) zur Bestimmung eines Beeinträchtigungsgrades (BG) des Kamerabildes (KB) umfasst, wobei die Steuereinheit bei Überschreiten eines vorbestimmten Beeinträchtigungsgrades (VBG) des Kamerabildes (KB) die Ausgabeeinheit (3) automatisch so ansteuert, dass das Kamerabild (KB) nicht mehr auf der Ausgabeeinheit (3) dargestellt wird und stattdessen die Ausgabeeinheit (3) das rückwärtige Verkehrsgeschehen (RV) mittels konventionellem Spiegelbild (SB) abbildet,
**dadurch gekennzeichnet,**
**dass** der Beeinträchtigungsgrad (BG) des Kamerabildes (KB) aufgrund von einer Verschmutzung der Kameraanordnung (2) hervorgerufen wird, und
**dass** die Steuereinheit (4) eine Beseitigung der Verschmutzung erkennt und als Reaktion darauf die Ausgabeeinheit (3) wieder einschaltet (170).

2. Die Rückblickeinrichtung (1) nach Anspruch 1,
**dadurch gekennzeichnet,**
**dass** der Beeinträchtigungsgrad (BG) des Kamerabildes (KB)aufgrund einer oder mehreren nicht verschmutzungsbedingter Störungen aus der Gruppe eines geringen Ladestatus einer Elektrobatterie in einem Elektrofahrzeug, eines ruckelnden Kamerabildes, eines flimmernden Kamerabildes, eines flackernden Kamerabildes, eines Standbildes, einer EMV-Einwirkung ist, hervorgerufen wird.

3. Die Rückblickeinrichtung (1) nach Anspruch 1 oder 2,
**dadurch gekennzeichnet,**
**dass** die Steuereinheit (4) dazu ausgestaltet ist, den Beeinträchtigungsgrad (BG) des Kamerabildes (KB) in einer zweidimensionalen Anordnung (41) an Messbereichen (42) im Kamerabild (KB) für jeden Messbereich (42) separat zu bestimmen.

4. Die Rückblickeinrichtung (1) nach Anspruch 3,
**dadurch gekennzeichnet,**
**dass** die zweidimensionale Anordnung (41) an Messbereichen (42) das gesamte Kamerabild (KB) überdeckt.

5. Die Rückblickeinrichtung (1) nach Anspruch 3 oder 4,
**dadurch gekennzeichnet,**
**dass** die Messbereiche (42) quadratisch oder rechteckig mit einem Kantenverhältnis von kleiner zu großer Kante von mehr als 50% über das Kamerabild (KB) angeordnet sind.

6. Die Rückblickeinrichtung (1) nach einem der Ansprüche 3 bis 5,
**dadurch gekennzeichnet,**
**dass** die zweidimensionalen Anordnung (41) ein zentrales Hauptfeld (43) aus mehreren Messbereichen (42) umfasst, das einen zentralen Bereich des Kamerabildes überdeckt.

7. Die Rückblickeinrichtung (1) nach einem der Ansprüche 3 bis 6,
**dadurch gekennzeichnet,**
**dass** die Steuereinheit (4) dazu ausgestaltet ist, einen der Messbereiche (42) als unzulässig beeinträchtigt anzusehen, wenn der vorbestimmte Beeinträchtigungsgrad (VBG) für diesen Messbereich (42) überschritten ist.

8. Die Rückblickeinrichtung (1) nach Anspruch 7,
**dadurch gekennzeichnet,**
**dass** die Steuereinheit (4) dazu ausgestaltet ist, das Kamerabild (KB) nicht mehr auf der Ausgabeeinheit (3) darzustellen, wenn 20% oder mehr der Messbereiche (42) als unzulässig beeinträchtigt angesehen werden oder wenn 10% oder mehr der Messbereiche (42) im zentralen Hauptfeld (43) als unzulässig beeinträchtigt angesehen werden.

9. Die Rückblickeinrichtung (1) nach einem der voranstehenden Ansprüche,
**dadurch gekennzeichnet,**
**dass** die Steuereinheit (4) dazu ausgestaltet ist, den Beeinträchtigungsgrad (BG) des Kamerabildes (KB) fortlaufend zu bestimmen.

10. Die Rückblickeinrichtung (1) nach einem der voranstehenden Ansprüche,
**dadurch gekennzeichnet,**
**dass** die Ausgabeeinheit (3) eine vollflächig teilreflektierende Ausgabeeinheit (3) ist, die ohne dargestelltes Kamerabild (KB) ein konventionelles Spiegelbild (SB) sichtbar über die gesamte Ausgabeeinheit (3) abbildet.

11. Ein Kraftfahrzeug mit mindestens einer Rückblickeinrichtung (1) nach einem der Ansprüche 1 bis 10.

12. Ein Verfahren (100) zum Betreiben einer Rückblickeinrichtung (1) für ein Kraftfahrzeug (10) nach einem der Ansprüche 1 bis 10, umfassend eine Kameraanordnung (2), eine mit der Kameraanordnung (2) verbundene zumindest in Bereichen teilreflektierende Ausgabeeinheit (3), insbesondere ein Bildschirm, und eine Steuereinheit (4), umfassend nachfolgende Schritte:
- Erfassen (110) eines rückwärtigen Verkehrsgeschehens (RV) mit der Kameraanordnung (2); und
- Darstellen (120) des mit der Kameraanordnung (2) erfassten rückwärtigen Verkehrsgeschehens (RV) als Kamerabild (KB) für einen Fahrer (5) des Kraftfahrzeugs (10) auf der Ausgabeeinheit (3) mit geeigneten Bildeigenschaften, die ein konventionelles Spiegelbild (SB) der teilreflektierenden Ausgabeeinheit zumindest überwiegend nicht sichtbar erscheinen lassen;
- Bestimmen (130) eines Beeinträchtigungsgrades (BG) des Kamerabildes (KB) durch die Steuereinheit (4), wobei der Beeinträchtigungsgrad (BG) des Kamerabildes (KB) aufgrund von Verschmutzung der Kameraanordnung (2) hervorgerufen wird;
- automatisches Ansteuern (140) der Ausgabeeinheit durch die Steuereinheit (4) in einer Weise, dass bei Überschreiten eines vorbestimmten Beeinträchtigungsgrades (VBG) das Kamerabild (KB) nicht mehr auf der Ausgabeeinheit (3) dargestellt wird; und
- sichtbares Abbilden (150) des rückwärtigen Verkehrsgeschehens (RV) zumindest in Bereichen auf der Ausgabeeinheit (3) mittels des konventionellen Spiegelbildes (SB) vom rückwärtigen Verkehrsgeschehen (RV), wobei die Steuereinheit (4) eine Beseitigung der Verschmutzung erkennt und als Reaktion darauf die Ausgabeeinheit (3) wieder einschaltet (170).

13. Das Verfahren nach Anspruch 12, umfassend den weiteren Schritt, dass das Kamerabild (KB) nicht mehr auf der Ausgabeeinheit (3) dargestellt wird (160), falls eine nicht verschmutzungsbedingte Störung, die die Beobachtung der rückwärtigen Verkehrsgeschehens (RV) beeinträchtigen können, vorliegt, wobei die Steuereinheit (4) eine Beseitigung der nicht verschmutzungsbedingten Störung erkennt und als Reaktion darauf die Ausgabeeinheit (3) wieder einschaltet (170)..

14. Das Verfahren nach einem Anspruch 12 oder 13, wobei der Beeinträchtigungsgrad (BG) des Kamerabildes (KB) in einer zweidimensionalen Anordnung (41) an Messbereichen (42) im Kamerabild (KB) für jeden Messbereich (42) durch die Steuereinheit (4) separat bestimmt wird.

15. Das Verfahren nach Anspruch 14, wobei die Steuereinheit (4) einen der Messbereiche (42) als unzulässig beeinträchtigt ansieht, wenn der vorbestimmte Beeinträchtigungsgrad (VBG) für diesen Messbereich (42) überschritten ist.

16. Das Verfahren nach Anspruch 15, wobei die Steuereinheit (4) das Kamerabild (KB) nicht mehr auf der Ausgabeeinheit (3) darstellt, wenn 20% oder mehr der Messbereiche (42) als unzulässig beeinträchtigt angesehen werden oder wenn 10% oder mehr der Messbereiche (42) im zentralen Hauptfeld (43) als unzulässig beeinträchtigt angesehen werden.

17. Das Verfahren nach einem der Ansprüche 12 bis 16, wobei die Steuereinheit (4) bei ausgeschalteter oder sich in einem Stand-by-Modus befindlichen Ausgabeeinheit (3) die Kamerabilder (KB) Frame-by-Frame weiter überprüft, um eine Beseitigung der Verschmutzung oder der nicht verschmutzungsbedingten Störung festzustellen.

18. Das Verfahren nach einem der Ansprüche 12 bis 17, wobei der Fahrer (5) des Kraftfahrzeugs (10) manuell eingibt, ob die Rückblickeinrichtung (1) in einem elektronischen Modus mittels Darstellen (120) des mit der Kameraanordnung (2) erfassten rückwärtigen Verkehrsgeschehens (RV) als Kamerabild (KB) oder in einem reflektierenden Modus mittels sichtbaren Abbildens (150) des rückwärtigen Verkehrsgeschehens (RV) zumindest in Bereichen auf der Ausgabeeinheit (3) mittels des konventionellen Spiegelbildes (SB) betrieben werden soll, wobei beim Inbetriebnehmen des Kraftfahrzeugs standardmäßig immer der elektronische Modus eingestellt wird.

## Claims

1. A rearview device (1) for a motor vehicle (10), comprising a camera arrangement (2) for detecting a rearward traffic situation (RV) and an output unit (3), in particular a screen, which is connected to the camera arrangement (2) and on which the rearward traffic situation captured by the camera arrangement (2) is displayed as a camera image (KB) at least for a driver (5) of the motor vehicle (10),
wherein the output unit (3) is an output unit (3) that is partially reflective at least in regions and, without a displayed camera image (KB), visibly displays a conventional mirror image (SB) of the rearward traffic situation at least in regions of the output unit (3) and, in the switched-on state, displays a camera image (KB) with suitable image properties, which make the conventional mirror image (SB) appear so as to be at least predominantly invisible, and the rearview device (1) additionally comprises a control unit (4) for determining a degree of impairment (BG) of the camera image (KB), wherein the control unit, when a predetermined degree of impairment (VBG) of the camera image (KB) is exceeded, automatically actuates the output unit (3) such that the camera image (KB) is no longer displayed on the output unit (3) and instead the output unit (3) displays the rearward traffic situation (RV) using a conventional mirror image (SB),
**characterized in that**
the degree of impairment (BG) of the camera image (KB) is brought about by contamination of the camera arrangement (2), and **in that** the control unit (4) recognizes that the contamination has been removed and, in response thereto, switches on (170) the output unit (3) again.

2. The rearview device (1) according to Claim 1,
**characterized in that**
the degree of impairment (BG) of the camera image (KB) is brought about by one or more non-contamination-related disturbances from the group of a low charge status of an electric battery in an electric vehicle, a jerky camera image, a flickering camera image, a jittering camera image, a still image, and an EMC effect.

3. The rearview device (1) according to Claim 1 or 2,
**characterized in that**
the control unit (4) is configured to determine the degree of impairment (BG) of the camera image (KB) in a two-dimensional arrangement (41) of measuring regions (42) in the camera image (KB) separately for each measuring region (42).

4. The rearview device (1) according to Claim 3,
**characterized in that**
the two-dimensional arrangement (41) of measuring regions (42) covers the entire camera image (KB).

5. The rearview device (1) according to Claim 3 or 4,
**characterized in that**
the measuring regions (42) are arranged over the camera image (KB) in a square or rectangle with an edge ratio of small edge to large edge of more than 50%.

6. The rearview device (1) according to any one of Claims 3 to 5,
**characterized in that**
the two-dimensional arrangement (41) comprises a central main field (43) of a plurality of measuring regions (42) covering a central region of the camera image.

7. The rearview device (1) according to any one of Claims 3 to 6,
**characterized in that**
the control unit (4) is configured to regard one of the measuring regions (42) as impermissibly impaired if the predetermined degree of impairment (VBG) for this measuring region (42) is exceeded.

8. The rearview device (1) according to Claim 7,
**characterized in that**
the control unit (4) is configured to no longer display the camera image (KB) on the output unit (3) if 20% or more of the measuring regions (42) are regarded as impermissibly impaired or if 10% or more of the measuring regions (42) in the central main field (43) are regarded as impermissibly impaired.

9. The rearview device (1) according to any one of the preceding claims,
**characterized in that**
the control unit (4) is configured to continuously determine the degree of impairment (BG) of the camera image (KB).

10. The rearview device (1) according to any one of the preceding claims,
**characterized in that**
the output unit (3) is a full-surface partially reflective output unit (3) which, without a displayed camera image (KB), displays a conventional mirror image (SB) visibly over the entire output unit (3).

11. A motor vehicle having at least one rearview device (1) according to any one of Claims 1 to 10.

12. A method (100) for operating a rearview device (1) for a motor vehicle (10) according to any one of Claims 1 to 10, comprising a camera arrangement (2), an output unit (3), in particular a screen, which is connected to the camera arrangement (2) and is at least partially reflective in regions, and a control unit (4), comprising the following steps:
- capturing (110) a rearward traffic situation (RV) with the camera arrangement (2); and
- displaying (120) the rearward traffic situation (RV) captured by the camera arrangement (2) as a camera image (KB) for a driver (5) of the motor vehicle (10) on the output unit (3) with suitable image properties which make a conventional mirror image (SB) of the partially reflective output unit at least predominantly invisible;
- determining (130) a degree of impairment (BG) of the camera image (KB) by the control unit (4), wherein the degree of impairment (BG) of the camera image (KB) is brought about by contamination of the camera arrangement (2);
- automatically actuating (140) the output unit by means of the control unit (4) such that when a predetermined degree of impairment (VBG) is exceeded, the camera image (KB) is no longer displayed on the output unit (3); and
- visibly imaging (150) the rearward traffic situation (RV) at least in regions on the output unit (3) by means of the conventional mirror image (SB) of the rearward traffic situation (RV), wherein the control unit (4) recognizes that the contamination has been removed and, in response thereto, switches on (170) the output unit (3) again.

13. The method according to Claim 12, comprising the further step of no longer displaying (160) the camera image (KB) on the output unit (3) if there is a non-contamination-related disturbance that may impair the observation of the rearward traffic situation (RV), wherein the control unit (4) recognizes that the non-contamination-related disturbance has been removed and, in response thereto, switches on (170) the output unit (3) again.

14. The method according to Claim 12 or 13, wherein the degree of impairment (BG) of the camera image (KB) in a two-dimensional arrangement (41) of measuring regions (42) in the camera image (KB) is determined separately for each measuring region (42) by the control unit (4).

15. The method according to Claim 14, wherein the control unit (4) regards one of the measuring regions (42) as impermissibly impaired if the predetermined degree of impairment (VBG) for this measuring region (42) is exceeded.

16. The method according to Claim 15, wherein the control unit (4) no longer displays the camera image (KB) on the output unit (3) if 20% or more of the measuring regions (42) are regarded as impermissibly impaired or if 10% or more of the measuring regions (42) in the central main field (43) are regarded as impermissibly impaired.

17. The method according to any one of Claims 12 to 16, wherein the control unit (4), with the output unit (3) switched off or in a standby mode, further checks the camera images (KB) frame by frame to determine that the contamination or non-contamination-related disturbance has been removed.

18. The method according to any one of Claims 12 to 17, wherein the driver (5) of the motor vehicle (10) manually inputs whether the rearview device (1) is to be operated in an electronic mode by means of displaying (120) the rearward traffic situation (RV) captured by the camera arrangement (2) as a camera image (KB) or in a reflective mode by means of visibly imaging (150) the rearward traffic situation (RV) at least in regions on the output unit (3) by means of the conventional mirror image (SB), wherein the electronic mode is always set by default when the motor vehicle is put into operation.

## Revendications

1. Dispositif rétroviseur (1) pour un véhicule automobile (10) comprenant un ensemble caméra (2) pour détecter une circulation arrière (RV) et une unité de sortie (3) reliée à l'ensemble caméra (2), en particulier un écran, sur lequel la circulation arrière détectée avec l'ensemble caméra (2) est représentée sous la forme d'une image de caméra (KB) au moins pour un conducteur (5) du véhicule automobile (10),
dans lequel l'unité de sortie (3) est une unité de sortie (3) en partie réfléchissante au moins dans des zones et qui, sans l'image de caméra représentée (KB), reproduit de manière visible un reflet conventionnel (SB) de la circulation arrière au moins dans des zones de l'unité de sortie (3) et représente dans l'état connecté une image de caméra (KB) avec des propriétés d'image appropriées qui laissent apparaître le reflet conventionnel (SB) au moins la plupart du temps de manière non visible, et
le dispositif rétroviseur (1) comprend de plus une unité de commande (4) pour définir un degré d'altération (BG) de l'image de caméra (KB), dans lequel en cas de dépassement d'un degré d'altération prédéfini (VBG) de l'image de caméra (KB) l'unité de commande commande automatiquement l'unité de sortie (3) de telle sorte que l'image de caméra (KB) n'est plus représentée sur l'unité de sortie (3) et à la place l'unité de sortie (3) reproduit la circulation arrière (RV) à l'aide du reflet conventionnel (SB),
**caractérisé en ce que**
le degré d'altération (BG) de l'image de caméra (KB) est induit en raison d'un encrassement de l'ensemble caméra (2) et **en ce que** l'unité de commande (4) reconnaît une suppression de l'encrassement et en réaction connecte de nouveau (170) l'unité de sortie (3).

2. Dispositif rétroviseur (1) selon la revendication 1,
**caractérisé en ce que**
le degré d'altération (BG) de l'image de caméra (KB) est induit en raison d'une ou plusieurs perturbations non dues à l'encrassement, choisies dans le groupe comprenant un état de charge faible d'une batterie électrique dans un véhicule électrique, une image de caméra saccadée, une image de caméra scintillante, une image de caméra vacillante, une image fixe, une influence de compatibilité électromagnétique.

3. Dispositif rétroviseur (1) selon la revendication 1 ou 2,
**caractérisé en ce que**
l'unité de commande (4) est conçue de manière à définir de manière distincte pour chaque zone de mesure (42) le degré d'altération (BG) de l'image de caméra (KB) dans une disposition en deux dimensions (41) sur des zones de mesure (42) dans l'image de caméra (KB).

4. Dispositif rétroviseur (1) selon la revendication 3,
**caractérisé en ce que**
la disposition en deux dimensions (41) sur les zones de mesure (42) recouvre toute l'image de caméra (KB).

5. Dispositif rétroviseur (1) selon la revendication 3 ou 4,
**caractérisé en ce que**
les zones de mesure (42) sont disposées de manière carrée ou rectangulaire sur l'image de caméra (KB) avec un rapport de bords du bord étroit sur bord large qui est supérieur à 50 %.

6. Dispositif rétroviseur (1) selon une des revendications 3 à 5,
**caractérisé en ce que**
la disposition en deux dimensions (41) comprend un champ principal central (43) composé de plusieurs zones de mesure (42) et qui recouvre une zone centrale de l'image de caméra.

7. Dispositif rétroviseur (1) selon une des revendications 3 à 6,
**caractérisé en ce que**
l'unité de commande (4) est conçue pour considérer une des zones de mesure (42) comme altérée de manière non recevable lorsque le degré d'altération prédéfini (VBG) est dépassé pour cette zone de mesure (42).

8. Dispositif rétroviseur (1) selon la revendication 7,
**caractérisé en ce que**
l'unité de commande (4) est conçue pour ne plus représenter l'image de caméra (KB) sur l'unité de sortie (3) lorsque 20 % ou plus des zones de mesure (42) sont considérées comme altérées de manière non recevable ou lorsque 10 % ou plus des zones de mesure (42) dans le champ principal central (43) sont considérées comme altérées de manière non recevable.

9. Dispositif rétroviseur (1) selon une des revendications précédentes,
**caractérisé en ce que**
l'unité de commande (4) est conçue pour définir en continu le degré d'altération (BG) de l'image de caméra (KB).

10. Dispositif rétroviseur (1) selon une des revendications précédentes,
**caractérisé en ce que**
l'unité de sortie (3) est une unité de sortie (3) en partie réfléchissante sur toute la surface et qui, sans image de caméra (KB) représentée, reproduit un reflet conventionnel (SB) de manière visible sur toute l'unité de sortie (3).

11. Véhicule automobile comprenant au moins un dispositif rétroviseur (1) selon une des revendications 1 à 10.

12. Procédé (100) destiné à faire fonctionner un dispositif rétroviseur (1) pour un véhicule automobile (10) selon une des revendications 1 à 10, comprenant un ensemble caméra (2), une unité de sortie (3) reliée à l'ensemble caméra (2) et en partie réfléchissante au moins dans des zones, en particulier un écran, et une unité de commande (4), comprenant les étapes suivantes :
- détection (110) d'une circulation arrière (RV) avec l'ensemble caméra (2) ; et
- représentation (120) de la circulation arrière (RV) détectée avec l'ensemble caméra (2) sous la forme d'une image de caméra (KB) pour un conducteur (5) du véhicule automobile (10) sur l'unité de sortie (3) avec des propriété d'image appropriées qui font apparaître au moins la plupart du temps de manière non visible un reflet conventionnel (SB) de l'unité de sortie en partie réfléchissante ;
- définition (130) d'un degré d'altération (BG) de l'image de caméra (KB) par l'unité de commande (4), dans lequel le degré d'altération (BG) de l'image de caméra (KB) est induit en raison de l'encrassement de l'ensemble caméra (2) ;
- commande automatique (140) de l'unité de sortie par l'unité de commande (4) de sorte que, en cas de dépassement d'un degré d'altération (VBG) prédéfini, l'image de caméra (KB) n'est plus représentée sur l'unité de sortie (3) ; et
- reproduction visible (150) de la circulation arrière (RV) au moins dans des zones sur l'unité de sortie (3) à l'aide du reflet conventionnel (SB) de la circulation arrière (RV), dans lequel l'unité de commande (4) reconnaît une suppression de l'encrassement et en réaction connecte de nouveau (170) l'unité de sortie (3).

13. Procédé selon la revendication 12, comprenant une autre étape de telle sorte que l'image de caméra (KB) n'est plus représentée (160) sur l'unité de sortie (3) dans le cas d'une perturbation non due à l'encrassement et qui peut altérer l'observation de la circulation arrière (RV), dans lequel l'unité de commande (4) reconnaît une suppression de la perturbation non due à l'encrassement et en réaction connecte de nouveau (170) l'unité de sortie (3).

14. Procédé selon une revendication 12 ou 13, dans lequel le degré d'altération (BG) de l'image de caméra (KB) est défini par l'unité de commande (4) de manière distincte pour chaque zone de mesure (42) dans une disposition en deux dimensions (41) sur des zones de mesure (42) dans l'image de caméra (KB).

15. Procédé selon la revendication 14, dans lequel l'unité de commande (4) considère une des zones de mesure (42) comme altérée de manière non recevable lorsque le degré d'altération prédéfini (VBG) est dépassé pour cette zone de mesure (42).

16. Procédé selon la revendication 15, dans lequel l'unité de commande (4) ne représente plus l'image de caméra (KB) sur l'unité de sortie (3) lorsque 20 % ou plus des zones de mesure (42) sont considérées comme altérées de manière non recevable ou lorsque 10 % ou plus des zones de mesure (42) dans le champ principal central (43) sont considérées comme altérées de manière non recevable.

17. Procédé selon une des revendications 12 à 16, dans lequel l'unité de commande (4) continue de vérifier les images de caméra (KB) cadre par cadre dans le cas où l'unité de sortie (3) est coupée ou se trouve dans un mode de veille pour constater une suppression de l'encrassement ou de la perturbation non due à un encrassement.

18. Procédé selon une des revendications 12 à 17, dans lequel le conducteur (5) du véhicule automobile (10) saisit manuellement si le dispositif rétroviseur (1) doit être mis en fonctionnement dans un mode électronique à l'aide d'une représentation (120) de la circulation arrière (RV) détectée avec l'ensemble caméra (2) sous la forme d'une image de caméra (KB) ou dans un mode réfléchissant à l'aide d'une reproduction visible (150) de la circulation arrière (RV) au moins dans des zones sur l'unité de sortie (3) à l'aide du reflet conventionnel (SB), dans lequel lors de la mise en service du véhicule automobile le mode électronique est toujours réglé par défaut.
